# EUROPEAN PATENT APPLICATION

(11) **EP 2 474 926 A1**
(43) Date of publication of application: **11.07.2012**
(21) Application number: 12150839.4
(22) Date of filing: 11.01.2012
(51) Int. Cl.: G06F 17/30

(54) **Method and system for generating compound suggestions using entity eligibility models**

(30) Priority: 11.01.2011 US 201113004504
(71) Applicant: We Create Inc., Waterloo, Ontario N2L 5C6 (CA)
(72) Inventor: Turner, Cameron, Kitchener, Ontario N2R 1L4 (CA); Sumner, Victor, Waterloo, Ontario N2N 3R6 (CA); Drimmie, Robert M., Kitchener, Ontario N2E 1A2 (CA); Sambells, Jeffrey, Guelph, Ontario N1H 8M3 (CA)
(74) Representative: Patel, Binesh

(57) **Abstract**

A computer-implemented method and system for generating a compound suggestion to a user of a suggestion platform application, based on a range of locality and contextual factors. The method comprises selecting an applicable set of suggestion templates based at least partly on a determined location of the client device at which a suggestion application platform is accessed via the user interface; applying a plurality of eligibility models to generate a set of suggestions for each suggestion template of the set of suggestion templates selected; scoring the plurality of entities to determine a subset of best fit entities; compiling at least one compound suggestion by filling each suggestion template of the set of suggestion templates with the subset of best fit entities; ranking the respective compound suggestions associated with the plurality of suggestion templates; and presenting, at the user interface of the client device, at least a subset of the ranked compound suggestions.

## Description

### FIELD

The present invention relates to a method and computer system for generating compound suggestions, using entity eligibility models, to a user of a suggestion platform application.

### BACKGROUND

The Internet, a collection of interconnected computer networks, and the World Wide Web continue to evolve rapidly with respect to both volume of information and number of users. The World Wide Web, or simply the Web, is one of the services built upon the Internet's infrastructure and comprises the dominant embodiment of the Internet for the lay person. The Web contains a vast amount of information on many subjects, including local businesses and other entities, local events and activities, local parks and recreation options as well as reviews, ratings and ranked lists pertaining thereto.

Typically a User is required to know the URL of a web site containing desired data or to employ the use of a search engine to uncover that URL in order to obtain desired information. A search engine is a tool that facilitates web navigation based upon entry of a search query comprising one or more keywords. Most search engines used for retrieval of electronic information are dependent on a user inputting a particular text string describing the requested content, and then processing the content to find material which relates to the search string. The relevance or desirability of the retrieved content to a user is therefore limited by the particular key words that a user chooses to input as the search text string.

The search engine then consults it's internally stored data describing the various web sites associated with the query and ranks them based upon various factors. The user is then presented with a list of results that might answer their query. The user is then expected to select a result and browse the suggested site for the data they need.

However, there exist a broad range of queries for which a search will not yield the intended answer. For example "What can I do with my kids this weekend?" Traditionally such a searcher has been required to reframe the question into something like "kids activities" and then append a city or state to the query before obtaining meaningful results. Further, the search engine doesn't actually answer the question, rather it provides a list of ranked search results that might answer the user's question following a deeper, and manual analysis by the user.

Furthermore, the ranked list as presented typically comprises separate search results without any consideration of potential or possible interaction(s) among subject matter of the search results, thus combining data in a more user-advantageous manner across the disparate search results, typically from disparate databases.

### SUMMARY

There is provided a computer-implemented method, executed in a processor, of generating a compound suggestion at a user interface of a client device. The method comprises determining a location of the client device at which a suggestion application platform is accessed via the user interface; selecting an applicable set of suggestion templates based at least partly on the determined location; applying a plurality of eligibility models to generate a set of suggestions for each suggestion template of the set of suggestion templates selected; scoring the plurality of entities to determine a subset of best fit entities; compiling at least one compound suggestion by filling each suggestion template of the set of suggestion templates with the subset of best fit entities; ranking the respective compound suggestions associated with the plurality of suggestion templates; and presenting, at the user interface of the client device, at least a subset of the ranked compound suggestions.

In one embodiment, compiling the at least one compound suggestions comprises time padding in relation to at least one entity of the subset of best fit entities..

In another embodiment, the at least one compound suggestion is compiled at least partly based on a direction of travel entity eligibility model.

In yet another embodiment, the at least one compound suggestion is compiled at least partly based on an event centric entity eligibility model.

The at least one compound suggestion, in another embodiment, may be compiled at least partly based on a predictive entity eligibility model.

In yet another embodiment, the at least one compound suggestion may be compiled at least partly based on a sequential entity eligibility model.

In a further embodiment, the suggestion application platform at the user interface of the client device is accessed using a user interface selected from the group of user interfaces consisting of mobile, chat, SMS, and a web-based user interface.

In yet another embodiment, the method further comprises selecting, at the user interface of the client device, at least one compound suggestion of the at least a subset of compound suggestions presented, and in response to the selecting, storing within a memory of the client device, a location, a time and a phone number associated with the selected at least one compound suggestion.

In another embodiment, at the user interface of the client device, the at least a subset of the ranked compound suggestions is presented in a format selected from the group of formats consisting of a natural language sentence, a digital map with suggested route highlighted, and a day-planner application itinerary.

Also provided is a computer system for generating a compound suggestion at a user interface of a client device. The system comprises an input template module for selecting an applicable set of suggestion templates based at least partly on a determined location; an entity eligibility module for applying a plurality of eligibility models to generate a set of suggestions for each suggestion template of the set of suggestion templates selected, and for scoring the plurality of entities to determine a subset of best fit entities; a template filling module for compiling at least one compound suggestion by filling each suggestion template of the set of suggestion templates with the subset of best fit entities; and a ranking and presentation module for ranking the respective compound suggestions associated with the plurality of suggestion templates, and for presenting, at the user interface of the client device, at least a subset of the ranked compound suggestions.

Also provided is a communication system for providing a compound suggestion when a suggestion platform application is accessed at a user interface of a client device, the communication system having a processor and memory, the memory including instructions stored thereon, which, when executed by the processor, cause the communication system to: select an applicable set of suggestion templates based at least partly on a determined location of the client device at which the suggestion application platform is accessed; apply a plurality of eligibility models to generate a set of suggestions for each suggestion template of the set of suggestion templates selected; score the plurality of entities to determine a subset of best fit entities; compile at least one compound suggestion by filling each suggestion template of the set of suggestion templates with the subset of best fit entities; rank the respective compound suggestions associated with the plurality of suggestion templates; and present, at the user interface of the client device, at least a subset of the ranked compound suggestions..

### BRIEF DESCRIPTION OF THE DRAWINGS

The invention will now be described by way of example only with reference to the following drawings in which:

Figure 1 shows an embodiment of a communication system architecture for accessing a suggestion application platform having a user interface presented at a client device;

Figure 2 shows further detail of an embodiment of a client device architecture as used in the communication system of Figure 1;

Figure 3 illustrates an overview of one embodiment of a method for generating compound suggestions at a user interface of the client device;

Figure 4 provides details of an embodiment for selecting applicable suggestion templates;

Figure 5 shows structure of an embodiment of a suggestion template and example results of a compound suggestion;

Figure 6 illustrates one embodiment of a process for determining and combining entity eligibility models for each template selected;

Figure 7 illustrates an embodiment of a clustered proximity entity eligibility model;

Figure 8 illustrates an embodiment of a sequential entity eligibility model;

Figure 9 illustrates an embodiment of a direction of travel entity eligibility model;

Figure 10 illustrates an embodiment of a predictive entity eligibility model;

Figure 11 illustrates an embodiment of an event-centric entity eligibility model;

Figure 12 illustrates a method for scoring the entities to generate the best fit entities;

Figure 13 illustrates an embodiment of the process of time padding;

Figure 14 illustrates an embodiment of a method for filling the templates with entities to compile a completed compound suggestion; and

Figure 15 illustrates an embodiment of a method for ranking the completed compound suggestions.

### DETAILED DESCRIPTION

The disclosure herein provides a method and system for generating a compound suggestion to a user based on a wide-range of localized and user-contextual factors. The term "compound suggestion" as used herein refers to a multi-destination, multi-activity suggestion having each activity to be performed in a particular sequence at a respective geographic destination or location.

By leveraging contextual attributes related to the user of the client device (for example, geographic location, intended destination's geographic location, direction of travel, speed and mode of travel) and attributes related to that location or intended destination location (for example, time of day, day of week, status of the sun and moon, current and predicted weather conditions) the system is configured to generate compound suggestions to the user regarding what entities or activities they might visit or engage in, based on entity eligibility models.

The method and system described herein applies to all location-aware computer systems ranging from handheld smart phones, tablet computers and GPS devices to location-aware Internet applications, information kiosks and automated tourism and trip planning services.

The end result is that a user accessing the system is given a ranked set of compound suggestions based on localized and globalized data, for activities they might participate in immediately or at a specified future time and place.

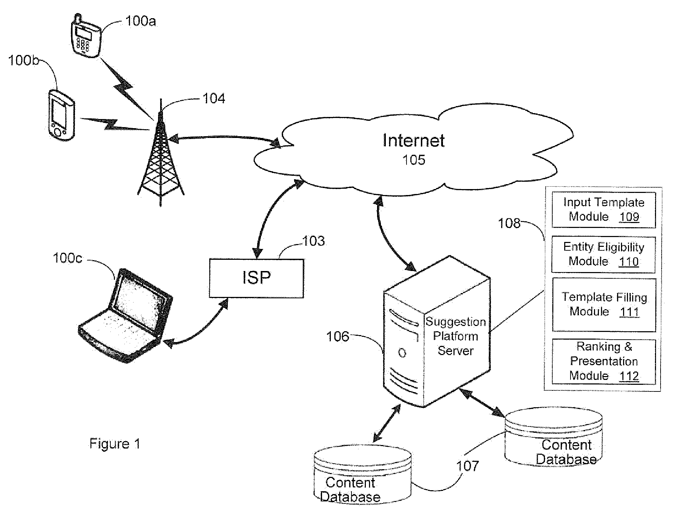

Figure 1 shows an embodiment of a communication system architecture for accessing a suggestion platform application via a user interface presented at a client device.

While a user at client device 100 is not necessarily required to manually provide input to the suggestion platform system 108 prior to receiving a compound suggestion from the system, they may access the system through one of many different user interfaces (including, but not limited to, mobile, chat, SMS, web, etc).

A computing device, or more particularly a client computing device such as a laptop, tablet computer or a desktop computer 100c, mobile phone 100a or Personal Digital Assistant (PDA) 100b (referred to collectively as "client device 100" herein), may be able to connect to the internet 105 over cellular networks via a wireless service provider /carrier system infrastructure 104, for example. Laptop or desktop computer 101 may connect to the internet 105 or other communication network using broadband Internet Service Provider 103, via either a wired landline connection or a wireless connection, for example. The plurality of client devices 100 be loaded with an appropriate browsing application with a user interface for accessing and browsing a locality-based website hosted by locality platform server 106.

Client device 100 may be a two-way communication device having both voice and data communication capabilities, including the capability to communicate with other computer systems.

Suggestion platform server 106 may be owned and maintained by an Application Service Provider (ASP) which provides a website or web portal application for registered users. The ASP provides access to the suggestion platform server 106, which is able to determine and deliver relevant content to client device 100. Suggestion platform server 106 may have access to one or more content database(s) 107.

Suggestion platform server 106 may comprise a plurality of different components including a computer processor, and a suggestion module 108. It should also be appreciated that the computer processor is able to execute computer program instructions for carrying out all of the functions of the suggestion module 108 described herein, including input template module 109, entity eligibility module 110, template filling module 111 and ranking/ presentation module 112.

Input template module 109 may comprise any combination of software, firmware and hardware to store and access suggestion templates. The suggestion templates may accessed and selected based on a user's location or locality and other contextual factors such as time of day, status of the sun and moon, current and predicted future weather conditions or any combination thereof, including, but not limited to, precipitation, visibility and temperature.

It should be noted that suggestion templates of input template module 109 can be developed in a number of ways. They may be manually added through a curated, editorial process or they may be added through machine learning systems that compute a logical correlation between two or more entity types. Equally, eligibility criteria assigned to the templates may be either editorial or computational or both. Lastly, the input templates could conceivably also be generated in real-time.

Entity eligibility module 110 may comprise any combination of software, firmware and hardware to determine and combine entity eligibility models for each selected suggestion template. The entities may be scored to provide a subset thereof, comprising the best fit entities. It is contemplated that the term entity as used herein is construed to include items, as the subject of the compound suggestion may relate to an item rather than an entity in some cases.

Template filling module 111 may comprise any combination of software, firmware and hardware to fill the templates with the best fit entities based on application of entity eligibility models, thereby compiling the compound suggestions.

Ranking / presentation module 112 may comprise any combination of software, firmware and hardware to rank the completed compound suggestions and manage presentation of a subset of the ranked compound suggestions to the user at suggestion application interface 240 of client device 100.

Alternate arrangements, where any functional modules or combination of functional modules comprising suggestion module 108 are resident at client device 100, instead of within suggestion platform server 106, are also contemplated.

Furthermore, aspects of the disclosure as illustrated in Figure 1 may be implemented via computer software in the form of computer readable code executed in memory by processors on one or more of the computers or servers contemplated above. Although the present Figure 1 illustrates separate components, it is contemplated, and should be understood, that various components could be combined into a single computer or server, or implemented across multiple computers or servers all connected via a communications medium (such as the Internet).

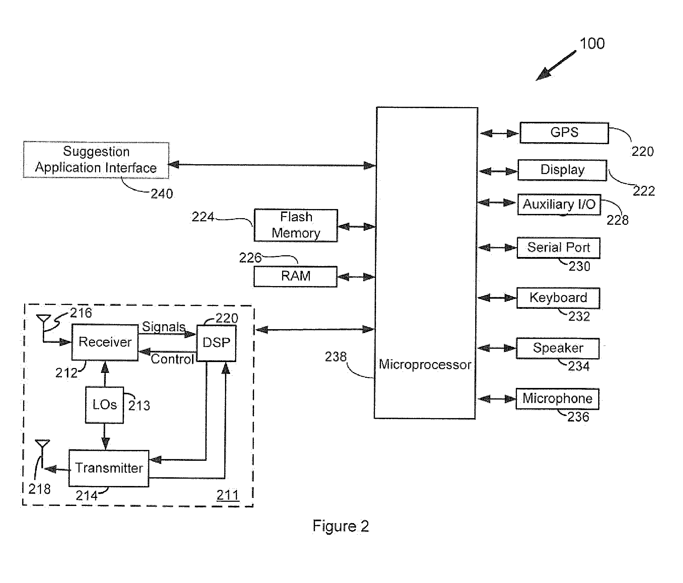

Figure 2 shows further detail of client device 100 configured according to an exemplary embodiment. Client device 100 may include a communication subsystem 211 which includes a receiver 212, a transmitter 214, and associated components, such as a processing module such as a digital signal processor (DSP)220. As will be apparent to those skilled in field of communications, the particular design of the communication subsystem 211 depends on the communication network in which client device 100 is intended to operate.

Client device 100 includes a microprocessor 238 which controls general operation of the device. The microprocessor also interacts with additional device subsystems such as a display 222, a flash memory 224, a random access memory (RAM) 226, a keyboard 232, a speaker 234, a microphone 236, a short-range communications subsystem such as BLUETOOTH (Bluetooth^{™}) for example, and any other device subsystems or peripheral devices. Client device 100 may also include a positioning device, such as a GPS receiver 220 for example. The GPS receiver 220 may be configured to detect and provide location information in order to determine the location of the client device 100, thus functioning as a location determination module. In the case of a non-location-aware desktop computer, its uniquely-assigned Internet Protocol (IP) address may be associated with a unique location of that desktop computer client device 100.

Operating system software used by the microprocessor 238 of client device 100 may be stored in a persistent store such as the flash memory 224, which may alternatively be a read-only memory (ROM) or similar storage element for storing computer program instructions thereon. The microprocessor 238, in addition to its operating system functions, may enable execution of software applications on the client device 100. A predetermined set of applications may be installed on the client device 100 during its manufacture. These may typically include data and voice communication applications, for example. The screen display 222 of client device 100 may be used to visually present an application's graphical user interface (GUI) to the user. The user can manipulate application data by modifying information on the GUI using an input device such as a keyboard 232 or other types of input devices, for example, a scroll wheel, trackball, light pen or touch sensitive screen.

Suggestion application interface 240 is shown in Figure 2 installed and operative on client device 100 according to an embodiment.

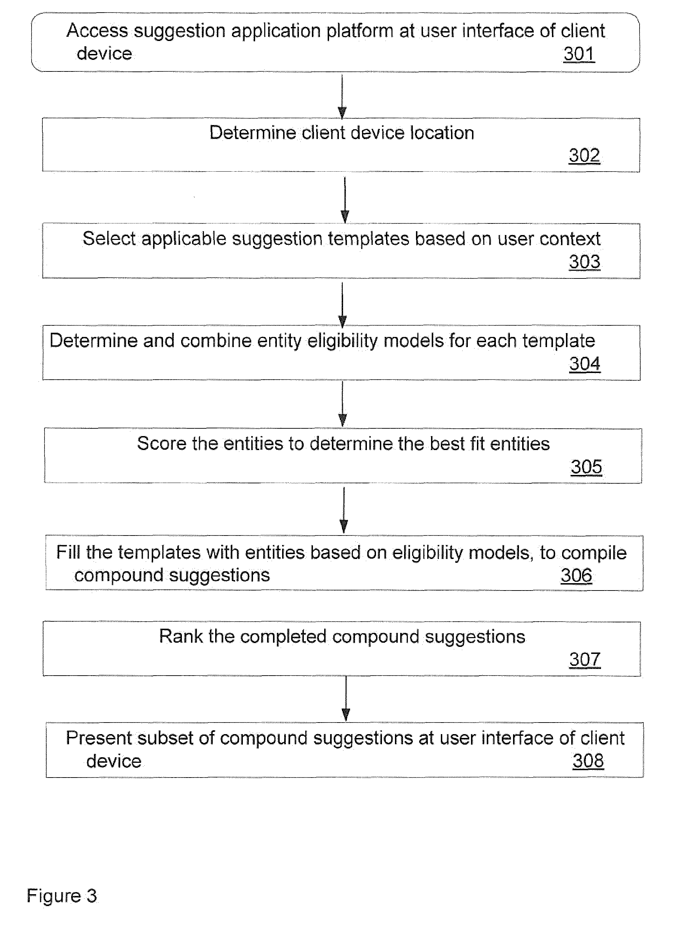

Figure 3 provides an overview of a method for generating suggestions at suggestion application interface 240 of the client device 100.

At step 301, a user accesses a suggestion application platform via suggestion application interface 240 at client device 100.

At step 302, the location of client device 100 is determined using any available means of a location determination module, including but not limited to GPS, wireless radio triangulation, IP address lookups or by a simple query to the user for manual input (postal code, nearby landmark, street intersection, city name etc).

In alternate embodiments, the system may detect and use any or all installed software or hardware-based location sensors, including but not limited to Skyhook Wireless' Loki, W3C's GeoLocation API, Google's Gears GeoLocation API or direct IP Address lookups. On mobile devices where GPS, WiFi Triangulation or Cell-tower triangulation are available these may also form part of a location sensor data package.

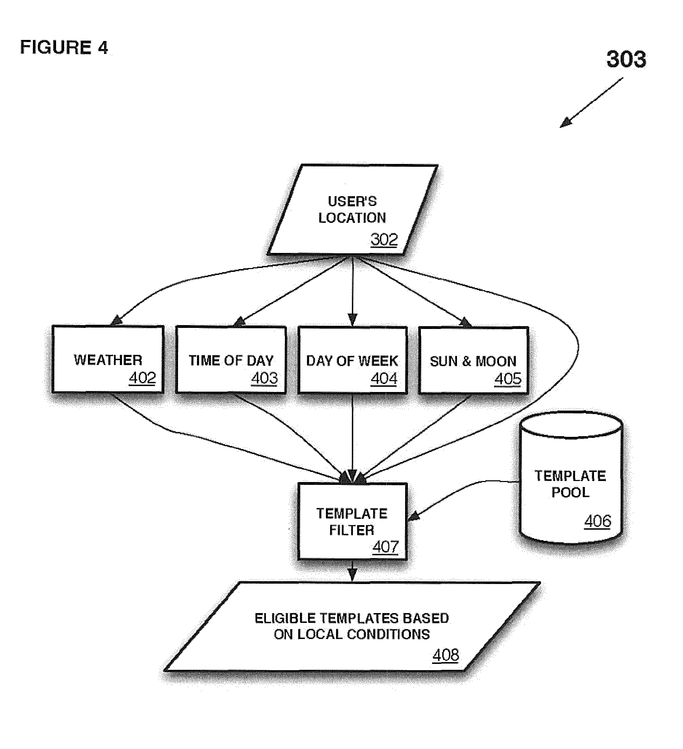

At step 303, applicable suggestion templates of input template module 109 are selected based on user location and the other user-contextual factors discussed. Figure 4 and related discussion below provide further detail of this process.

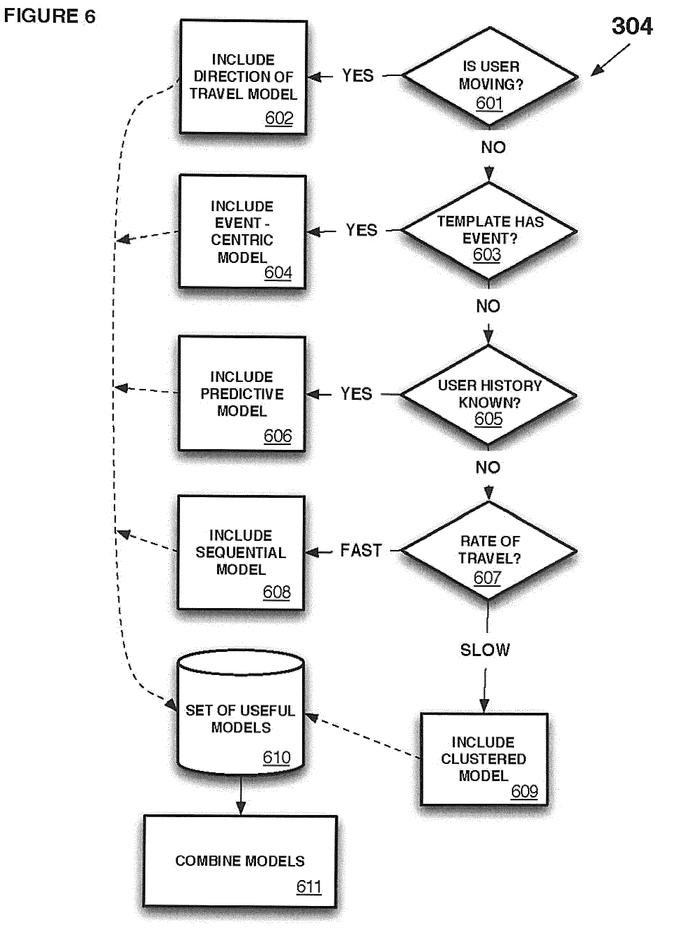

At step 304, entity eligibility models are determined and combined, for each template selected. Figure 6 and related discussion below provide further detail of this process.

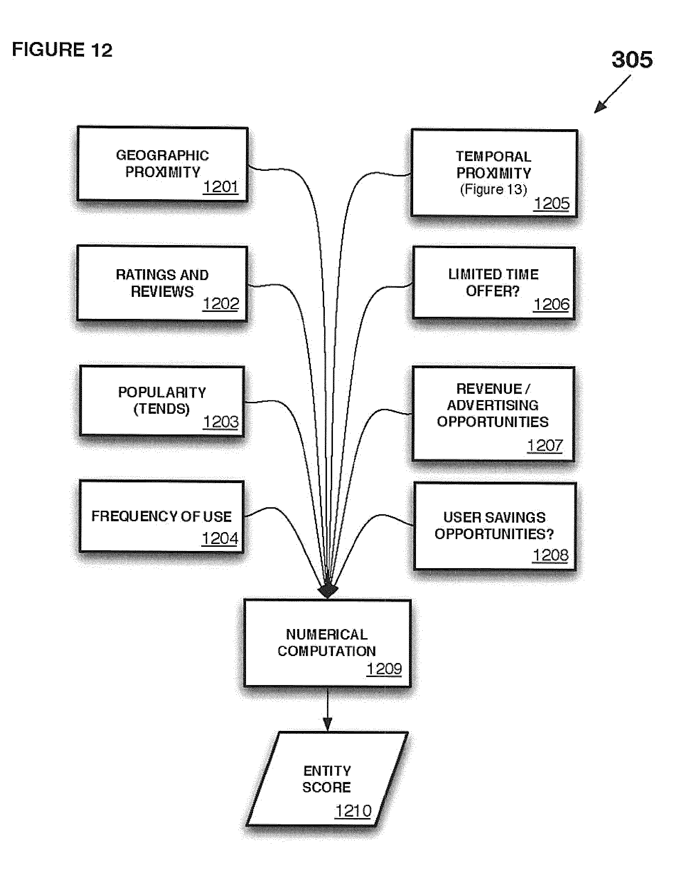

At step 305, the entities are scored to determine a subset of best fit entities. Figure 12 and related discussion below provide further detail of this process.

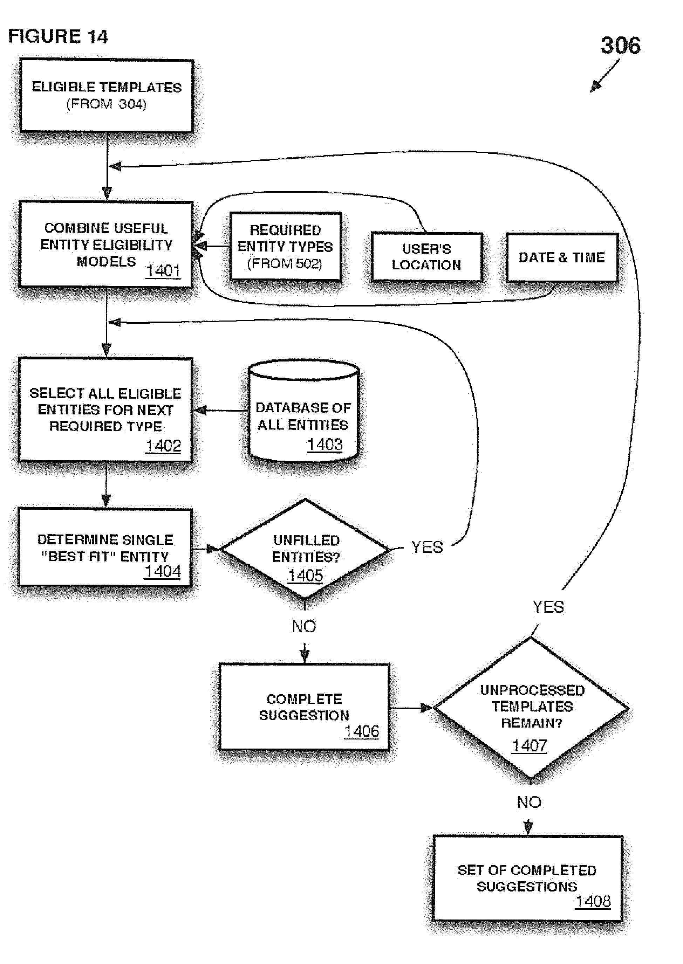

At step 306, the selected suggestion templates are filled with entities based on the eligibility models applied, to compile the compound suggestions. Figure 14 and related discussion below provide further detail of this process.

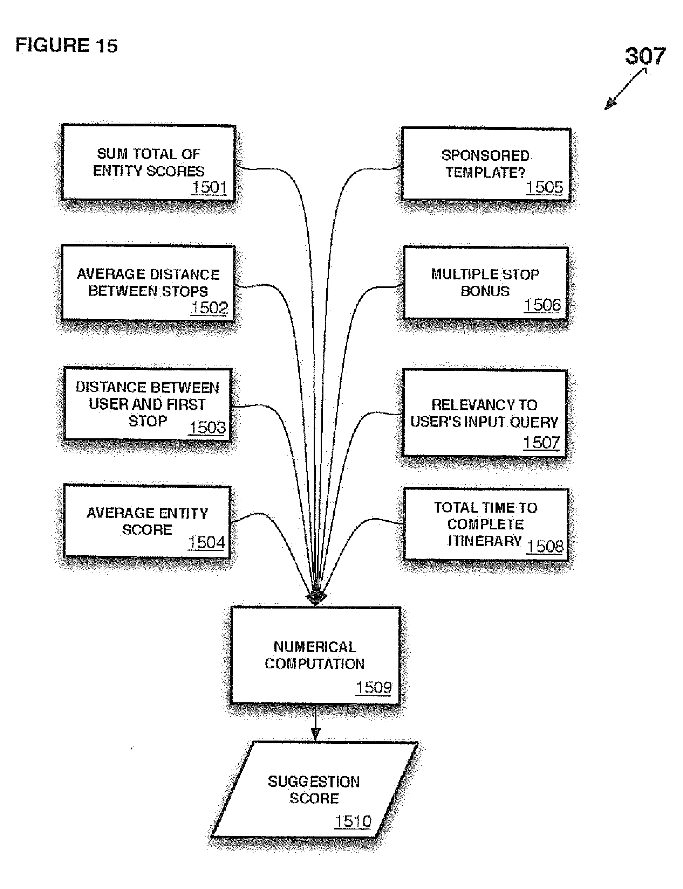

At step 307, the compound suggestions are ranked. Figure 15 and related discussion below provide further detail of this process.

At step 308, a subset of the ranked compound suggestions, typically comprising the highest-ranked compound suggestions, are presented at suggestion application interface of client device 100 to the user.

Figure 4 provides details of an embodiment for selecting applicable suggestion templates of input template module 109 based on location and other contextual factors. Given the location, the system then determines a number of other contextual factors that may also impact the eligibility of a particular template. These may include, but are not limited to, the location-specific weather, the time of day, the day of the week, and the status of the sun and the moon.

The weather 402 criteria used in template selection may either be the current conditions or the future predicted conditions or both. For immediate activity suggestions that would result in itineraries longer than 3 hours the current conditions may be used for the first few destinations followed by the predicted conditions for later destinations. For instances where the user is looking or ideas for a future time (also known as time shifting), only the predicted conditions may be used.

In other embodiments, the weather may also be omitted as a factor if the time shifting is far enough in the future that the conditions can't be reliably predicted (say 48 hours or more). In one specific embodiment, the template selection presented here may be determined based on the chance and type of precipitation (rain, snow, hail, etc), the visibility (sunny, cloudy, foggy, etc) and the temperature.

The time of day 403 may be used as a factor in terms of determining a template's eligibility. Using the time at the requested location informs a number of selection influencers. Specifically the system identifies relevant meal times (breakfast, lunch and dinner) and filters out (or de-selects) templates that do not match. Additionally, culturally recognized time blocks (morning, afternoon or evening) may also be relevant in determining which templates to include and exclude.

Similar to the time of day, the day of the week 404 also has an input on entity eligibility and template selection. First, it can be used to determine the difference between a week day (when the user is expected to be working) and the week end (when they are likely not). Moreover, the calendar date can also be used to determine location-specific holidays or major events that would have an impact on the suggestions being made to the user. Both of these elements may be used in template selection.

Templates may also be selected based on the current and predicted status of the sun and moon 405. Leveraging the sun rise and set times for a given day allows for suggestions that are only applicable and valid when the sun is up. Since the day lengths vary with the seasons, making this decision based on clock-time alone would be unwise. Additionally, the same can also be said for the moon or a combination thereof. A typical example might be a star-gazing suggestion that would require the sun to be below the horizon for it to be valid, but can also be ranked higher if the moon is also not in the sky, or is in a near new moon phase.

Figure 4 shows a typical suggestion template definition complete with required entity types and eligibility criteria. The process of selecting templates also includes actually filtering templates, at 407, for eligibility. The filtering process, at 407, involves retrieving only the subset of templates available in the input template pool 406 of input template module 109 that match the complete set of eligibility criteria and the prevailing location specific conditions, to result in a set of templates 408 based on local conditions.

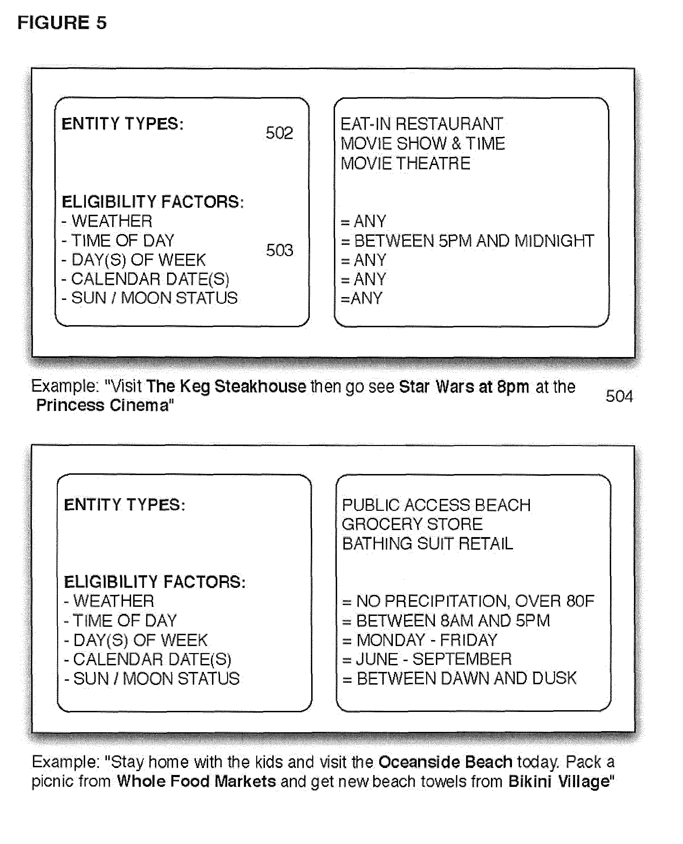

Figure 5 shows structure of an embodiment of a suggestion template and example results of a compound suggestion 504, in view of entity types 502 and eligibility factors 503. The compound suggestion is generated as a text string providing a multi-destination, multi-activity suggestion having each activity to be performed in a particular sequence at a respective geographic destination or location. For example, "Visit the Keg Steakhouse then go see Star Wars at 8pm at the Princess Cinema" .

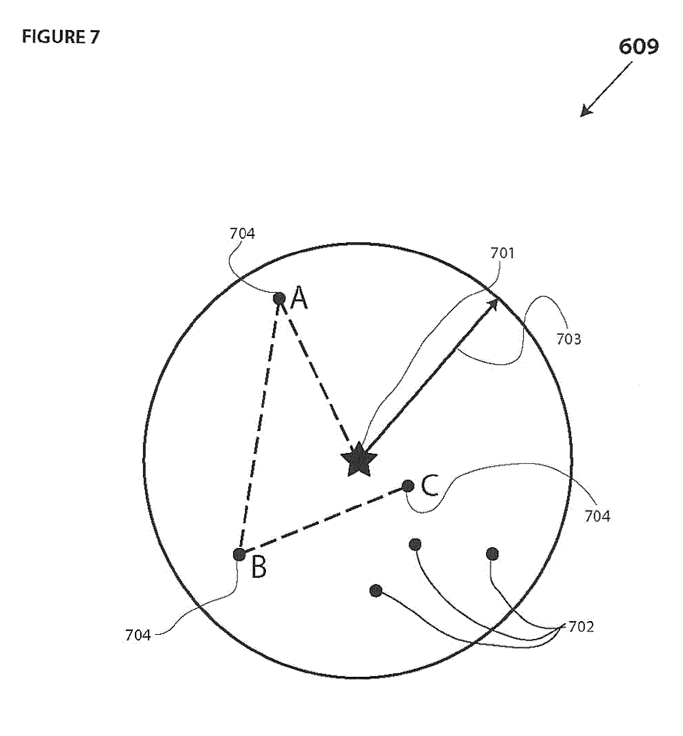

Figure 6 illustrates one embodiment of a process for determining and combining entity eligibility models for each template selected. This process begins with a simple elimination filter based on what is known about the user. The order of model elimination is not important and Figure 6 demonstrates only one possible permutation for the arrangement of decisions taken. The individual models will be described in further detail below in relation to Figures 7-11.

Figure 7 shows the simplest eligibility model, one of clustered proximity 609. The user's current location 701 is used as the center point of a circle with radius 708, which is some reasonable distance commensurate with the mode of travel 607 of the user. For example a user who is determined to be walking could have a smaller radius than one who is driving a car. For all entities 702, 704 that match the required entity types from the template, a best-fit computation is performed (as detailed in relation to Figure 12). Once the best entities 704 are selected an order is determined and an optimal path A to B to C may be computed for the sequence of stops. Poor fit entities 702 may be discarded for consideration in this template but may still be used in completing other templates.

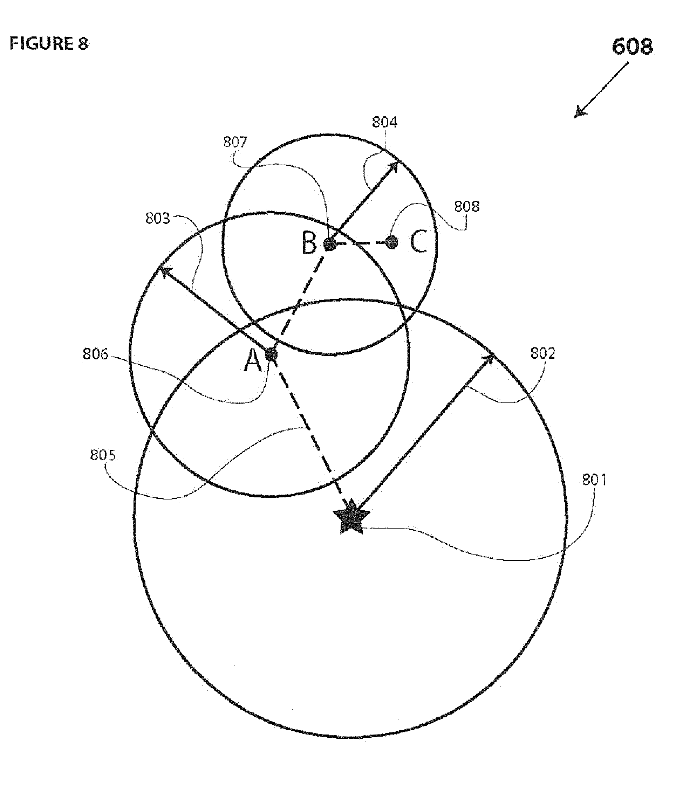

Figure 8 depicts a slightly more complicated model, that of sequential eligibility 608. The goal of the sequential model is to respect the fact that as the user 801 moves from one location to another while completing the suggestion, their objective center point 801, 806, 807 also moves. Last stop 808 in the current suggestion represents a potential initial center point for further suggestions. Using the sequential model gives the user a sense of logical progression and minimizes the impression that they are being directed "all over the map."

As illustrated in figure 8, for this model only the first entity must be within the initial radius 802 to represent the radius within which the model must find the first stop "A" 806. Next, based on the location of "A" 806 a new radius 803 is selected (optionally larger or smaller than radius 802) within which to find entity "B" 807. If further entities are needed to complete a template then they may be selected in the same manner, iteratively moving the center point for the next radius to the location of the current stop.

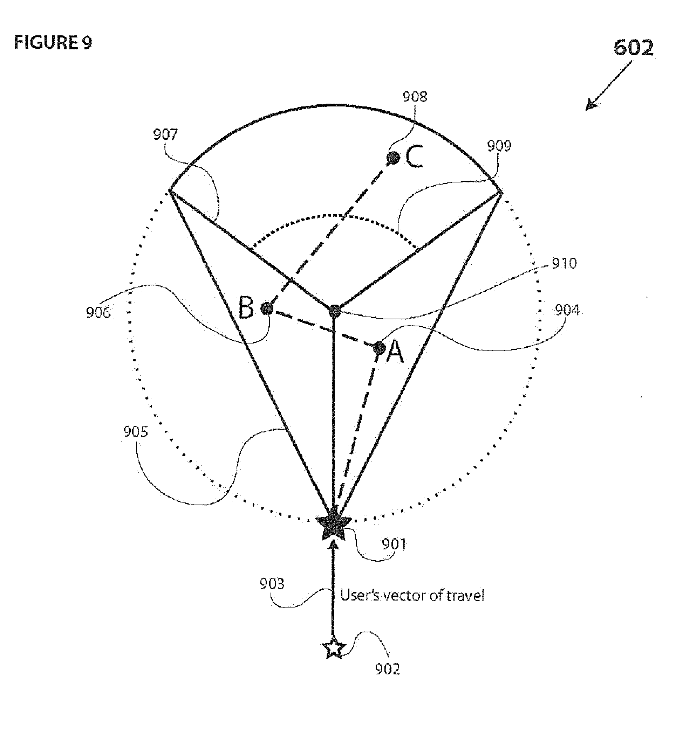

Figure 9 depicts a direction of travel entity eligibility model 602 and may be included if the user 901 is determined to be moving 601. Many mobile devices have a means of determining direction of travel 903 automatically, however it can also be inferred from a user making two rapid-succession (eg. 5 minutes or less) queries to the system with different locations. From this, the system can determine both direction and rate of travel (also known as a vector 903).

Furthermore, if can be assumed that some proportion of users who are seeking suggestions are actively in motion thus the system can formulate direction of travel eligibility model 602 that ensures all entities selected for the suggestion are "in front" of them. Figure 9 depicts the process of determining a bounding container 905 (no longer just a simple circle) for the selection of entities that lie beyond the user's current travel vector 903. Initially a user's current location 901 and previous location 902 are used to compute both a direction and rate of travel 903. The time span used for determining the previous location is likely on the order of minutes and is often provided by the hardware present in modern mobile, network connected devices. In this model the basic concept of a circle is still necessary to create the boundary shape, but only a "pie shaped" wedge 905 is used to determine eligibility. The radius 907 may determined based on the user's rate of travel (smaller radius for slow travel, larger radius for fast) and center point of the circle 910 is projected forward of the user's current location 901, placing the user on the perimeter of the circle. From there an angle 909 describes how far the suggestion algorithm can reasonably ask the user to deviate from their projected course. Again for slower travel the angle 909 may be wider, for faster travel the angle 909 may be narrower. The angle 909 may be adjusted wider or narrower as the rate of travel 903 changes.

Best-fit entities may then be selected within this "pie shaped" area of eligibility 905. Lastly, and again with continued reference to Figure 9, the sequence of stops 904, 906, 908 should form a forward progression for the user, each farther from the initial starting point 901 than the last.

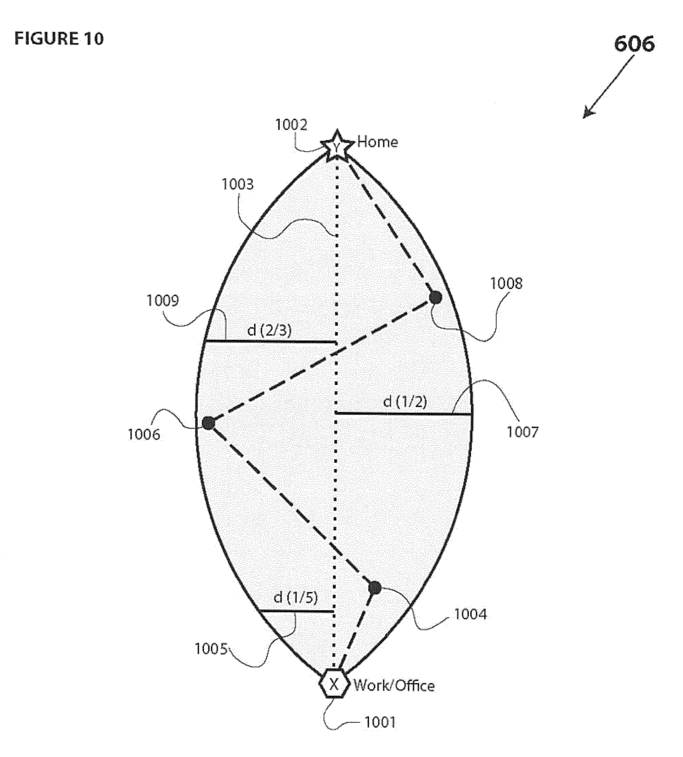

Figure 10 shows predictive model 606 which requires that we know about a user's historical location for a given time and their likely next destination. For example a user may be driving to home 1002 from work 1001 which would make suggestions contained between those home 1002 and work 1001 endpoints of higher perceived value or benefit.

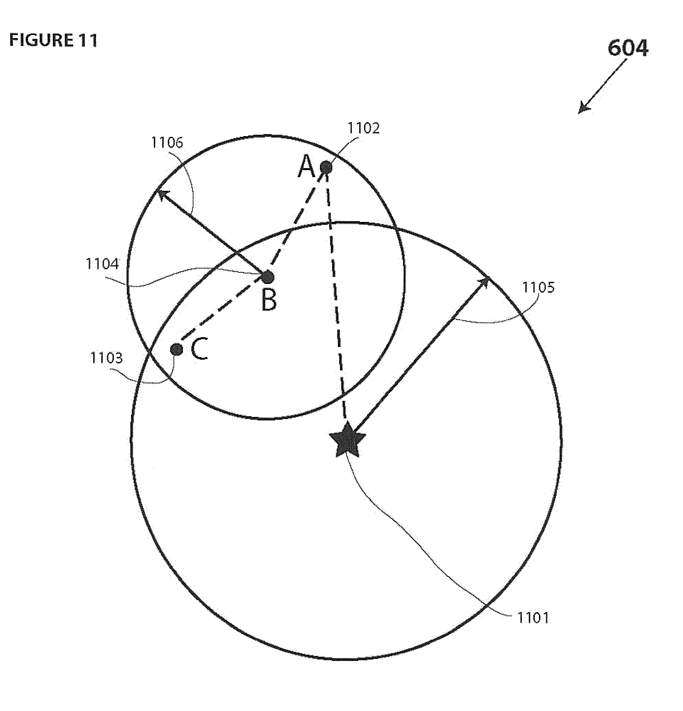

Figure 11 shows event-centric model 604 which may be applied if the suggestion template under consideration includes a timed event such as a movie at a theatre, a sporting event or a concert.

In one embodiment, with reference to the event centric model of Figure 11, it is recognized that when participating in a scheduled event (a movie, concert, festival, meeting or other event with a specific start time) that the event itself forms the focal point of any suggestion regardless of what stops come before or after. For example "dinner and a concert at 8pm" still focuses on the concert even though the user is first proceeding to eat dinner. The event-centric model illustrated in Figure 11 recognizes that a majority of users prefer all their other stops 1103, 1102 to be in close proximity to the event 1104 rather than their current location 1101. Therefore for any template that involves an event, the event B is selected first. The event must be within a reasonable radius 1105 of the user (often based on the type of event: movies closer, major concerts or theatrical performances perhaps farther away). The remainder of the entities required to complete the template then use the location of the event 1104 (the venue) as the center point, typically with a smaller radius of eligibility 1106.

Lastly, and with reference to Figure 6 again, either of sequential model 608 and clustered model 609 may typically be used based on a user's inferred or stated rate of travel 607. If a user is moving slowly (for example, walking, biking or otherwise "on foot") then ensuring all points are near their current location is desirable. If faster means of travel are available (car, bus, or aircraft) then ensuring each sequential stop is "near" the last stop is desirable and allows for a wider set of eligible entities.

Once a set of useful eligibility models is determined, they may be combined at 611. There are 120 plausible permutations and combinations of the five presented models and all satisfy some particular niche for users. The combined model determines which entities are eligible for consideration for completing the suggestion, and in which order they must be determined. They are not always determined in the sequence they are presented as evidenced by event-centric model 604 (described in relation to Figure 11).

It may also be appropriate to take into account the historical usage 605 of the suggestion algorithm by a single user to further refine the validity of the suggestions. If it is possible to determine a consistent and repeating progression of locations based on a user's history then the area of eligibility can be further constrained to maximize value to the user. Take the example illustrated in figure 10 where a single user repeatedly requests suggestions between home 1002 and their place of work 1001. If the system determines that the user is imminently expected to be traveling to a particular destination (say from work to home) we can make an efficient suggestion that uses this knowledge. The dotted line 1003 describes the "as the crow flies" route between bounding points 1001 and 1002. Rather than using a circle to describe the area of eligibility in this model, a simple computation may be used that allows for maximum divergence 1007 from the expected path at the midpoint between the two endpoints 1001 and 1002, and a commensurately smaller divergence 1005, 1009 near either endpoint 1001, 1002. Again, the allowable divergence may be based on the rate of travel, only in this scenario it is taken from the historical data for the user.

Figure 12 illustrates a method for scoring the entities to generate the best fit entities and selecting the best-fit entity for each stop in a suggestion template. This is done by computing, at step 1209, an aggregate weighted score at step 1210, as depicted in Figure 12. This scoring system may use several fitness indicators as input, some of which are specifically enumerated in figure 12.

Geographic proximity 1201 is the most obvious and widely used in current local awareness systems. Simply put, the closer something is to the user the more value it has to them due to the perceived reduction in travel time.

Ratings and reviews 1202 are also an increasingly significant metric that allow high-quality establishments to beat out nearby poorer ones.

Popularity 1203, defined as the relative increase or decrease in foot traffic over a given sliding time window, has recently become available through "check-in" services like FourSquare, Gowalla and Facebook Places. An overall increase in foot traffic from one week to the next will, on balance, signify an increase in popularity.

Frequency of use 1204 may be applied as a dampening factor used by the suggestion algorithm implementation herein. It serves to reduce the repetition of the same popular, nearby and highly rated establishments for repeat-users of the system. Thus, the system has a simple feedback loop to avoid making the exact same suggestion over and over again.

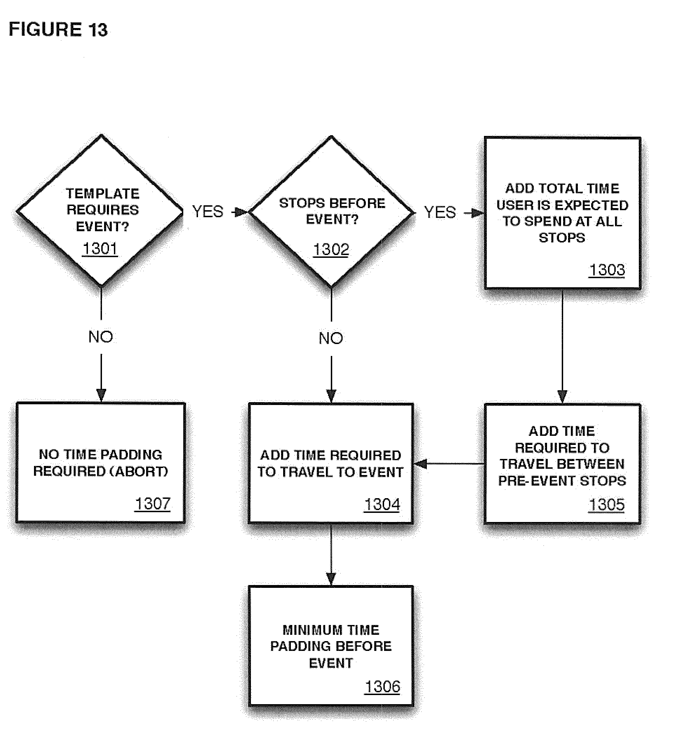

Temporal proximity 1205 has two main components. The first is the eligibility based on whatever time-padding is required as described in relation to Figure 13 following. The second is that once that broad eligibility has been determined, the soonest possible event should receive the highest score (all other things being equal).

Some entities may be associated with limited life offers 1206. For instance, a movie will eventually leave theaters, live theatre runs will end to make way for new shows and some businesses are seasonal. Moreover, some of these entities will have promotions that expire on a certain date that make them more appealing to suggest now than any other day. Therefore, events, shows and businesses with a limited remaining window of opportunity should be scored higher to allow the user to discover something they wouldn't appreciate missing out on.

Another factor that may be considered in the suggestion algorithm herein requires a bias towards suggestions that have the possibility of making money. These revenue and advertising opportunities 1207 may be explicit (contracted advertising) or implicit (referral revenue from affiliate programs etc). In both cases the presence of a revenue opportunity can be used to modify the decision of which entity to use in a suggestion. Additionally, the historical revenue value of using one entity over another in a particular suggestion can also be evaluated to maximize earning potential.

Lastly, as a corollary to the revenue bias in 1207, the opportunity for the user to save money or time 1208 through coupons, promotions and other incentives provides a bias in favor of the user. This is a tie-breaking rule that may be used when all other factors are considered equal.

All of the above-discussed factors 1201 to 1208 may be processed via numerical computation at step 1209 to formulate a deterministic and predictable entity score at step 1210 that changes only with differing inputs, rather than with randomness.

Figure 13 provides details of an embodiment illustrating a process of time padding- that is, padding the user's current time to determine what events are eligible. Events 1301 add further complexity to the above-described eligibility models. If a template calls for any stops 1302 prior to the event, then the time the user can be expected to spend completing those stops needs to be considered, at steps 1303, 1304, 1305 when selecting 'eligible' events. Simply being in the future is insufficient in some cases. For example, if the suggestion encourages a user to stop and eat dinner on the way to an event, there needs to be sufficient time 1306 between 'now' and the event start to allow for both travel and the consumption of food. Therefore, the process comprises a procedure of adding blocks of time 1303, 1304 and 1305 that correspond to the expected travel time and the time spent at each stop. This refines what events can actually be used in a given template by changing the eligible start times. This process is done on a template by template basis. An event that is ineligible for a "dinner and a show" template might be fine in a "show followed by dessert" template. The order of the itinerary is therefore of significance.

Figure 14 provides an embodiment of a method for filling the templates with entities to compile a completed compound suggestion. This process includes determining and combining applicable entity eligibility models as described in relation to Figures 6 to 11, for each of the selected suggestion templates.

At step 1401, useful or applicable entity models may be combined, based on required entity types, the user's location and date and time. At 1402, all eligible entities are selected for the next required entity type, from a database of all entities. At 1404, the best fit entity is determined. At 1405, if there are unfilled entities, further selection is repeated at step 1402. If there are no unfilled entities, then at 1406, the suggestion is complete. At 1407, if any selected templates are unprocessed as yet, the process repeats at step 1401. If no unprocessed templates remain, then at step 1408, the set of suggestions is deemed completed.

Figure 15 provides details of a method, in one embodiment, for ranking or prioritizing the completed compound suggestions. Once all of the templates are filled with entities, the completed suggestions are ranked in order to determine which ones are best to return to the end user at client device 100, based on suggestion score 1510. Several criteria are enumerated herein, but this is not intended to be exhaustive list of criteria. Figure 15 illustrates the criteria that are considered.

The first factor in scoring the suggestions is the total score of the entities 1501 (from Figure 12 and related discussion). This serves two purposes. First, careful consideration is put into each entity selection, and therefore the higher the aggregate score the higher the quality of the suggestion. The second purpose is that suggestions with more destinations will inevitably outrank those with only a few destinations(or one). This in effect ranks the more complicated and interesting suggestions at the top of the pile.

Furthermore, the average distance between stops 1502 is considered. The smaller the average distance the tighter the grouping of stops and the higher the likelihood that the user will find the suggestion acceptable.

A corollary to the average distance between stops is the total distance between the user and the first stop 1503. The closer the first stop is to the user the sooner they can act on the suggestion and the shorter the travel time regardless of the mode of travel.

In addition to the total entity score, the average entity score 1504 may serve as a valuable benchmark for the overall quality. If the average score is approximately equal to the total score, and the number of destinations is more than one, then at least one of the stops is poorly rated thereby "diminishing" the overall utility of the suggestion. This may be used as a safeguard against unusually high single entity scores in a multi-destination suggestion.

For the purposes of commercialization, the suggestion scoring computation also considers if the overall template has been sponsored 1505.

Another scoring factor is a simple multiple stop bonus 1506. For multi-destination suggestions, artificially ranking suggestions with more stops over those with less stops may be desirable to a user.

Also, a partial score for ranking suggestions based on the relevancy of a suggestion to the user's input query 1507 may be computed and considered.

Yet another suggestion scoring factor may be based on the total time required to complete the itinerary 1508. The total time available for acting on a suggestion may be constrained by the closing-time of the final stop on the itinerary, by the user's disclosed available time (via an input like "I've got 3 hours to eat"), or by some environmental factor such as bad weather, time of day or the sunrise/sunset.

Given the above suggestion scoring factors, a numerical computation is performed at step 1509 to create a total overall score at step 1510 for each suggestion resulting from application of the suggestion algorithm herein. These are then ranked or prioritized in order from highest score to lowest and made available according to step 308 as described above with reference to Figure 3. Step 308 takes the completed, scored and ordered set of suggestions from the system algorithm herein and selects the "n" top ones to return to the suggestion application interface 240 of client device 100.

The compound suggestions may be returned and presented to the user via the suggestion application interface 240 of client device 100 in varied formats, such as, but not limited to, natural language sentences, a digital map with suggested route highlighted, or within a day-planner application itinerary including therewith the compound suggestion with related details.

The invention described herein applies to all location-aware computer systems from handheld smart phones and GPS devices to location-aware Internet applications, information kiosks and automated tourism and trip planning services. Although preferred embodiments of the invention have been described herein, it will be understood by those skilled in the art that variations and combinations thereof may be made thereto without departing from the scope of the appended claims. In yet further instances, it is contemplated that the methods performed and described herein may be performed in different orders or sequences than the illustrative embodiments presented herein.

## Claims

1. A computer-implemented method, executed in a processor, of generating a compound suggestion at a user interface of a client device, the method comprising:
selecting an applicable set of suggestion templates based at least partly on a determined location of the client device at which a suggestion application platform is accessed via the user interface;
applying a plurality of eligibility models to generate a set of suggestions for each suggestion template of the set of suggestion templates selected;
scoring the plurality of entities to determine a subset of best fit entities;
compiling at least one compound suggestion by filling each suggestion template of the set of suggestion templates with the subset of best fit entities;
ranking the respective compound suggestions associated with the plurality of suggestion templates; and
presenting, at the user interface of the client device, at least a subset of the ranked compound suggestions.

2. The method of claim 1 wherein compiling the at least one compound suggestions comprises time padding in relation to at least one entity of the subset of best fit entities.

3. The method of any of claim 1 or claim 2 further comprising compiling the at least one compound suggestion at least partly based on a direction of travel entity eligibility model.

4. The method of any of claims 1 to 3 further comprising compiling the at least one compound suggestion at least partly based on an event centric entity eligibility model.

5. The method of any of claims 1 to 3 further comprising compiling the at least one compound suggestion at least partly based on a predictive entity eligibility model.

6. The method of any of claims 1 to 3 further comprising compiling the at least one compound suggestion at least partly based on a sequential entity eligibility model.

7. The method of any of claims 1 to 6 wherein the suggestion application platform at the user interface of the client device is accessed using a user interface selected from the group of user interfaces consisting of mobile, chat, SMS, and a web-based user interface.

8. The method of any of claims 1 to 7 further comprising selecting, at the user interface of the client device, at least one compound suggestion of the at least a subset of compound suggestions presented, and in response to the selecting, storing within a memory of the client device, a location, a time and a phone number associated with the selected at least one compound suggestion.

9. The method of any of claims 1 to 8 further comprising ranking the compound suggestions at least partly based on review and rating data.

10. The method of any of claims 1 to 9 wherein, at the user interface of the client device, the at least a subset of the ranked compound suggestions is presented in a format selected from the group of formats consisting of a natural language sentence, a digital map with suggested route highlighted, and a day-planner application itinerary.

11. A computer system for generating a compound suggestion at a user interface of a client device, the system comprising:
an input template module for selecting an applicable set of suggestion templates based at least partly on a determined location;
an entity eligibility module for applying a plurality of eligibility models to generate a set of suggestions for each suggestion template of the set of suggestion templates selected, and for scoring the plurality of entities to determine a subset of best fit entities;
a template filling module for compiling at least one compound suggestion by filling each suggestion template of the set of suggestion templates with the subset of best fit entities; and
a ranking and presentation module for ranking the respective compound suggestions associated with the plurality of suggestion templates, and for presenting, at the user interface of the client device, at least a subset of the ranked compound suggestions.

12. The computer system of claim 11 wherein the suggestion application platform at the user interface of the client device is accessed using a user interface selected from the group of user interfaces consisting of mobile, chat, SMS, and a web-based user interface.

13. The computer system of any of claims 11 or 12 further comprising a memory of the client device for storing therewithin a location, a time and a phone number associated with a selected compound suggestion of the at least a subset of compound suggestions presented.

14. The system of any of claims 11 to 13 wherein the entity eligibility module comprises a predictive entity eligibility model.

15. A communication system for providing a compound suggestion when a suggestion platform application is accessed at a user interface of a client device, the communication system having a processor and memory, the memory including instructions stored thereon, which, when executed by the processor, cause the communication system to:
select an applicable set of suggestion templates based at least partly on a determined location of the client device at which the suggestion application platform is accessed;
apply a plurality of eligibility models to generate a set of suggestions for each suggestion template of the set of suggestion templates selected;
score the plurality of entities to determine a subset of best fit entities;
compile at least one compound suggestion by filling each suggestion template of the set of suggestion templates with the subset of best fit entities;
rank the respective compound suggestions associated with the plurality of suggestion templates; and
present, at the user interface of the client device, at least a subset of the ranked compound suggestions.
